# EUROPEAN PATENT SPECIFICATION

(11) **EP 1 632 433 B1**
(45) Date of publication and mention of the grant of the patent: **10.10.2012**
(21) Application number: 05021596.1
(22) Date of filing: 11.01.2001
(51) Int. Cl.: B64D 11/06, B60N 3/06

(54) **Passenger seat with fabric suspension legrest**
Fahrgastsitz mit Fussstütze aus Stoff
Siège passager avec repose-jambes en tissu

(30) Priority: 14.01.2000 US 176365 P
(43) Date of publication of application: 08.03.2006
(62) Divisional of application: 01300231.6
(73) Proprietor: BE AEROSPACE, INC., Wellington, FL 33414 (US)
(72) Inventor: Plant, Tommy G., Winston-Salem North Carolina 27127 (US)
(74) Representative: Sherrard-Smith, Hugh

(56) References cited:
- EP-A- 0 869 060
- EP-A- 1 116 654
- WO-A-96/18537
- US-A- 5 560 681

## Description

### Technical Field and Backaround of the Invention

This invention relates to a passenger seat, such as is used on public transportation such as aircraft, trains and buses. The application discloses improvements in the operation of reclinable seats resulting from coordinated movements of the seat back, seat bottom, bolster and leg rest elements.

EP 0 869 060 discloses a seat that can move from an inclined position to a reclined position by movement about a pivot between the seat and the back.

US 5 560 681 discloses a seat that has a seat bottom extension assembly,

### Summary of the Invention

It is an object of the invention to provide a passenger seat which is comfortable. It is another object of the invention to provide a passenger seat which is durable.

It is another object of the invention to provide a passenger seat which is easily and quickly repaired or replaced as needed.

It is another object of the invention to provide a passenger seat which is lightweight.

It is another object of the invention to provide a passenger seat which is extensible.

According to one aspect of the present invention a reclinable passenger seat with all the technical features of claim 1.

According to yet another preferred embodiment of the invention, the seat bottom extension assembly comprises a frame for carrying the seat bottom relative to the seat back and for selectively moving the seat bottom relative to the seat back to increase or decrease the length of support provided to the legs of the passenger.

According to yet another preferred embodiment of the invention, the seat bottom extension assembly includes an actuator assembly for moving the seat bottom relative to the seat back.

### Brief Description of the Drawings

Some of the objects of the invention have been set forth above. Other objects and advantages of the invention will appear as the invention proceeds when taken in conjunction with the following drawings, in which:
Figure 1 is a vertical cross-sectional view of a passenger seat according to one embodiment of the invention In a takeoff and landing position;
Figure 2 is a vertical cross-sectional view of the passenger seat of Figure 1 in a recline position;
Figure 3 is a vertical cross-sectional view of a passenger seat of Figure 1 in a sleeper position;
Figure 4 is a fragmentary view of the seat pan of the seat shown in Figure 1 in a recline position;
Figure 5 is a fragmentary view of the seat pan of the seat shown in Figure 1 in a landing and takeoff position;

### Brief Description of the Drawings

Some of the objects of the invention have been set forth above. Other objects and advantages of the invention will appear as the invention proceeds when taken in conjunction with the following drawings, in which:

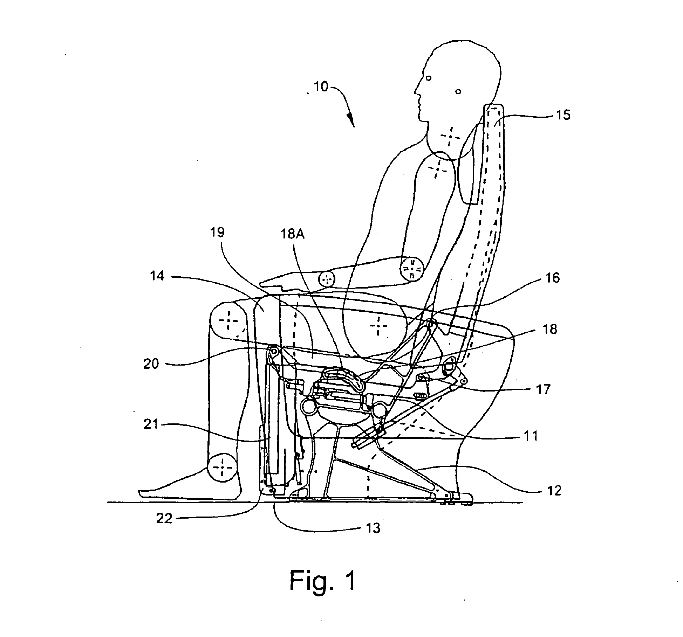

Figure 1 is a vertical cross-sectional view of a passenger seat according to one embodiment of the invention In a takeoff and landing position;

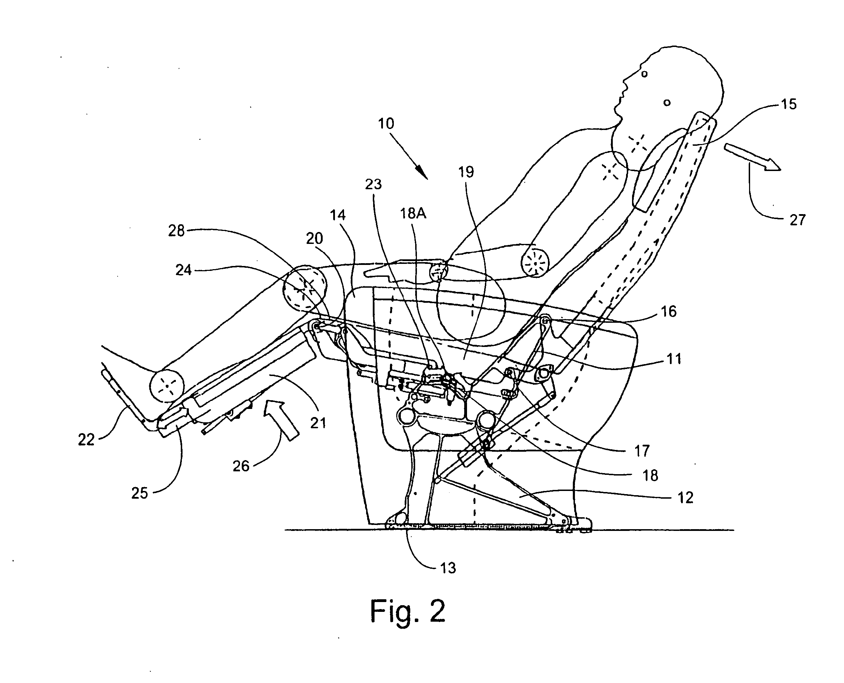

Figure 2 is a vertical cross-sectional view of the passenger seat of Figure 1 in a recline position;

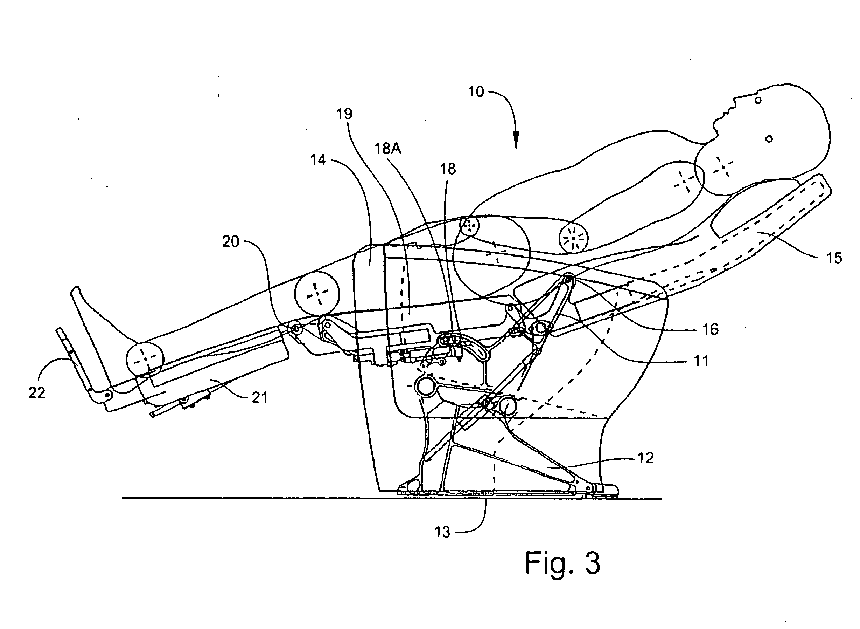

Figure 3 is a vertical cross-sectional view of a passenger seat of Figure 1 in a sleeper position;

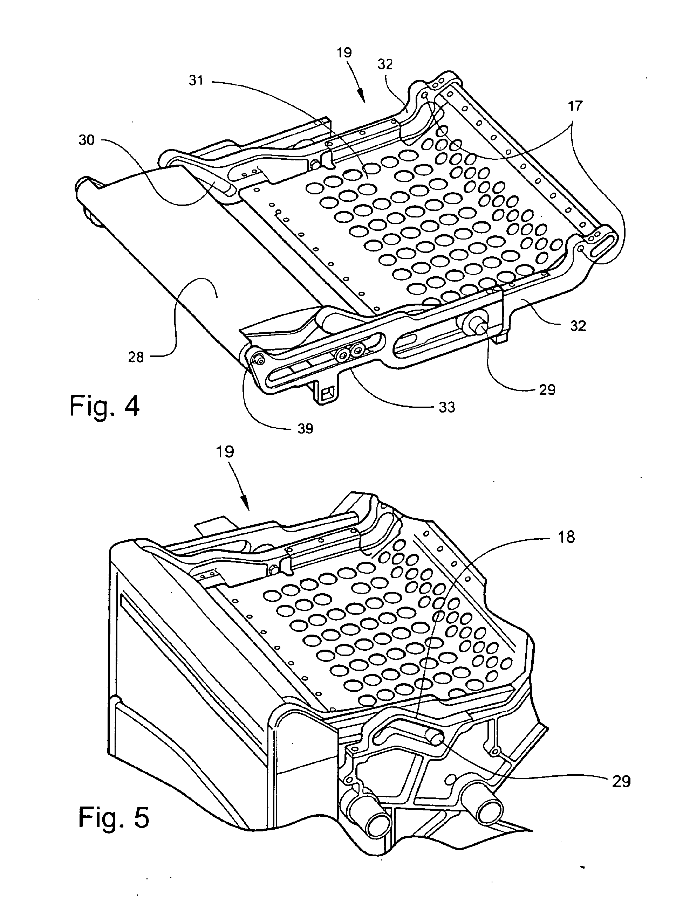

Figure 4 is a fragmentary view of the seat pan of the seat shown in Figure 1 in a recline position;
Figure 5 is a fragmentary view of the seat pan of the seat shown in Figure 1 in a landing and takeoff position;

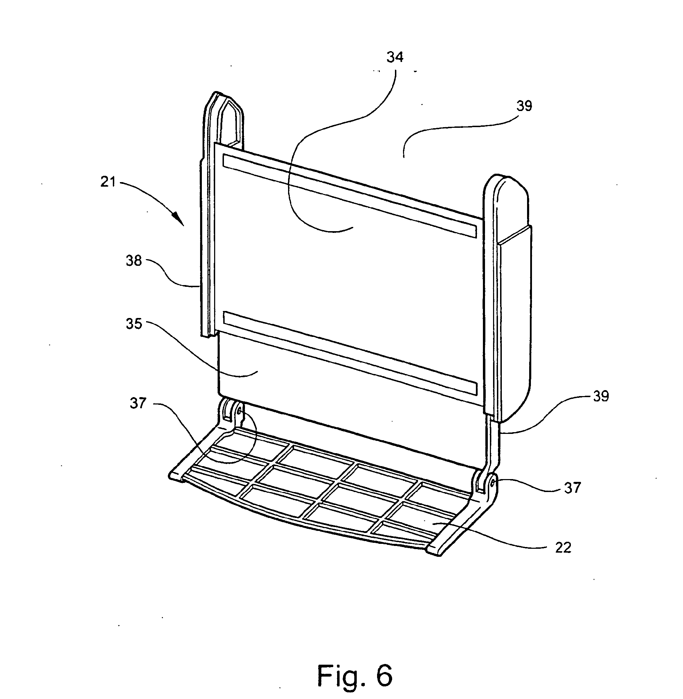

Figure 6 is a view of the legrest and footrest portion of the passenger seat shown in Figure 1;

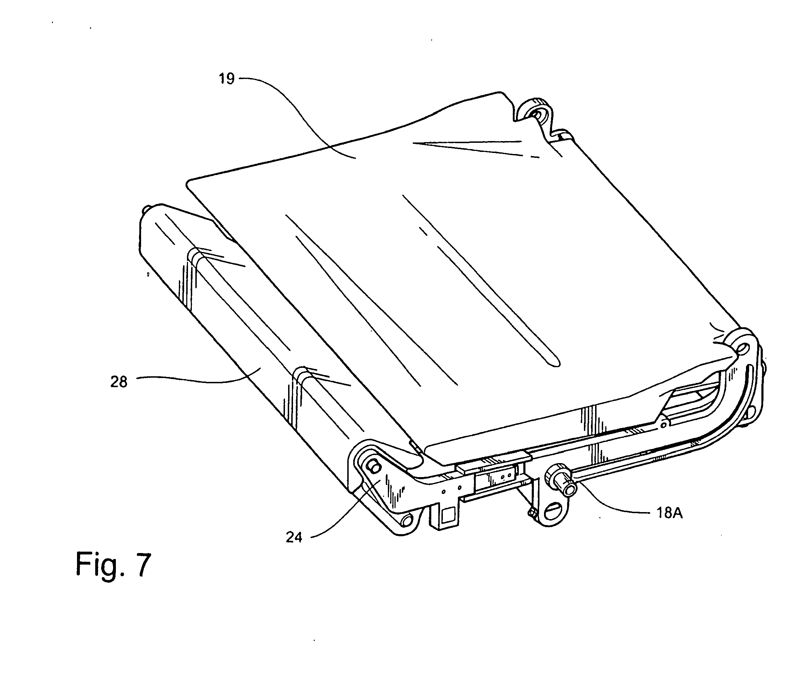

Figure 7 is a view of the legrest and footrest in the landing and takeoff position;

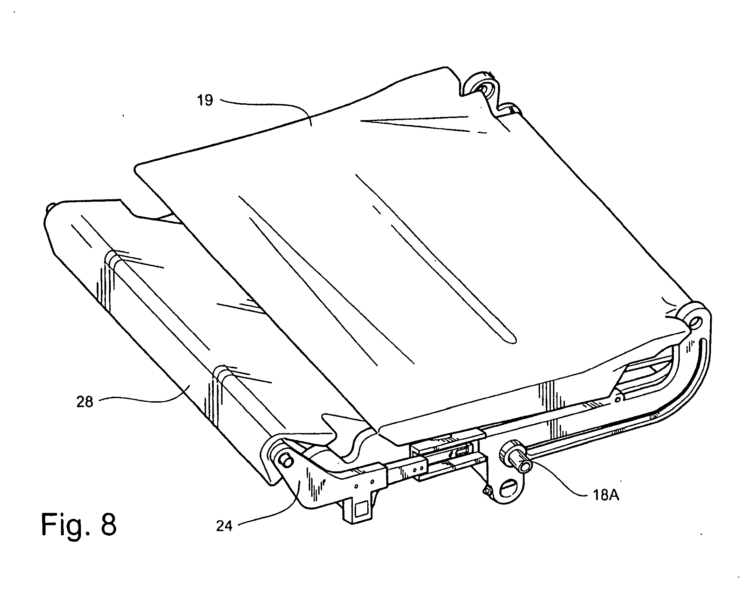

Figure 8 is a view of the legrest and footrest in the recline position;

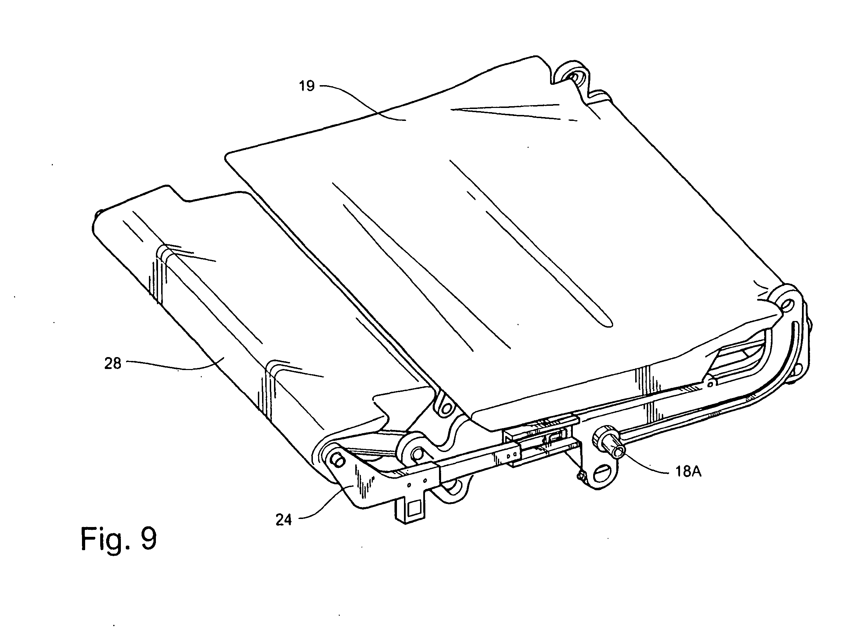

Figure 9 is a view of the legrest and footrest in the sleeper position;

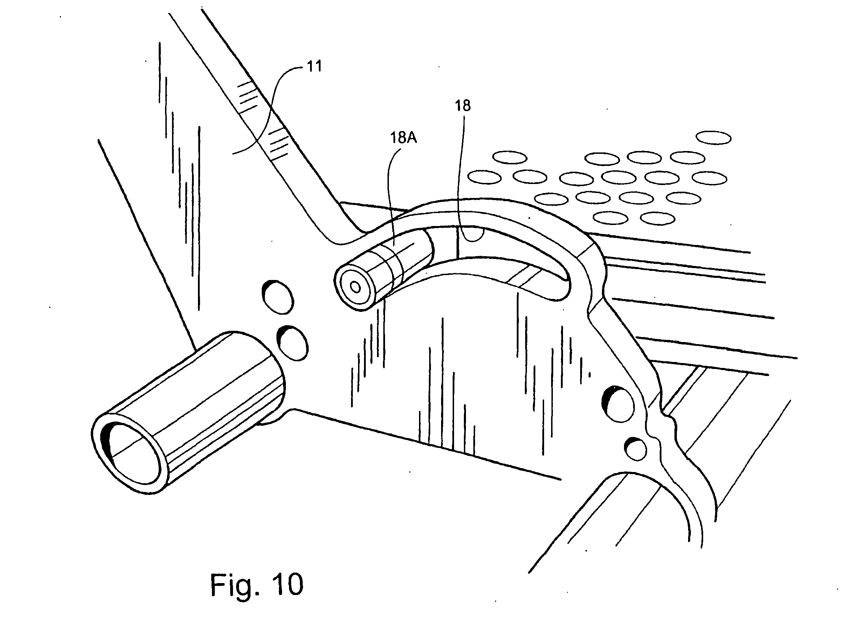

Figure 10 is a fragmentary view of the seat pan articulation slot in the landing and takeoff position;

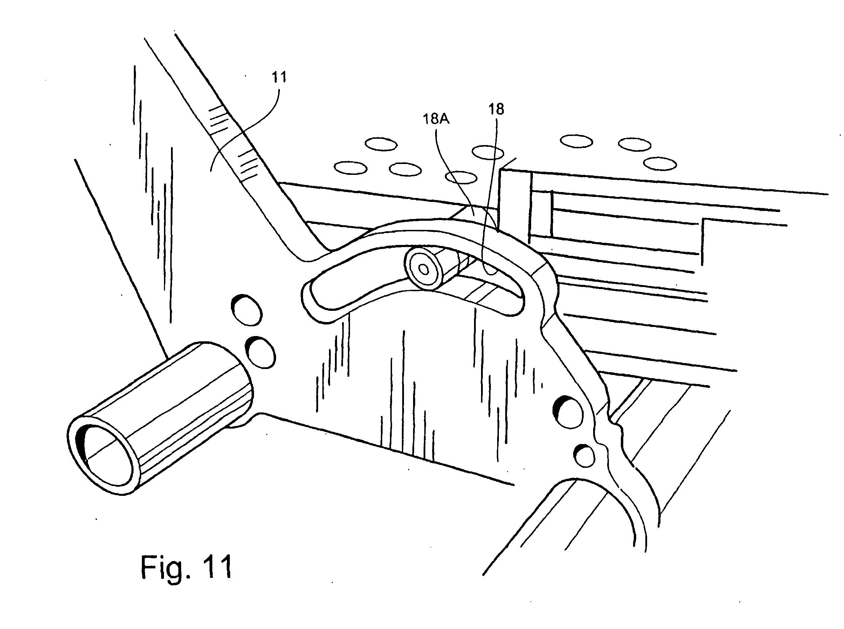

Figure 11 is a fragmentary view of the seat pan articulation slot in the recline position;

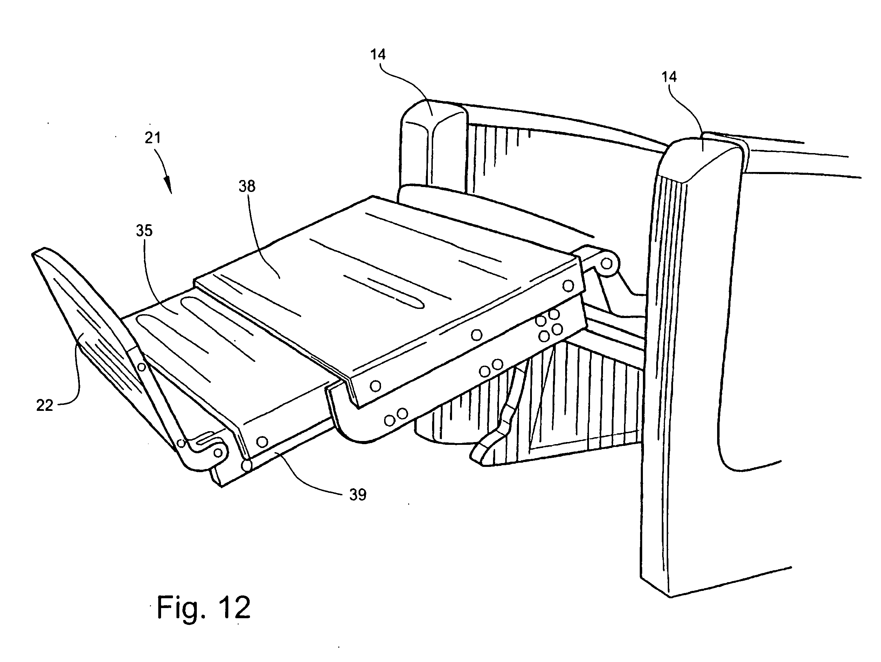

Figure 12 is a fragmentary view of the seat shown in Figure 1, showing the extension of the legrest;

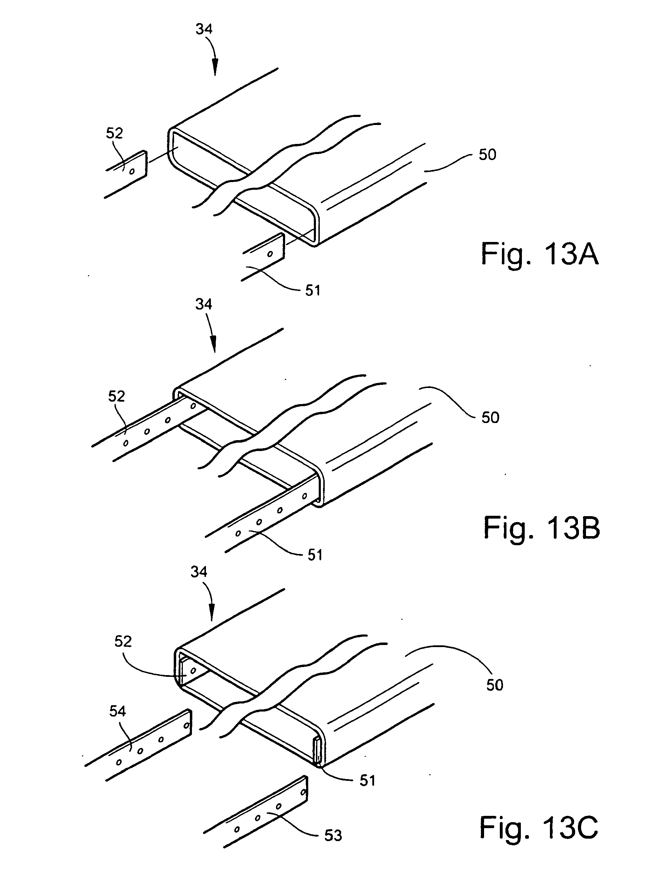

Figures 13A-13E are fragmentary views showing the assembly of the fabric legrest; and

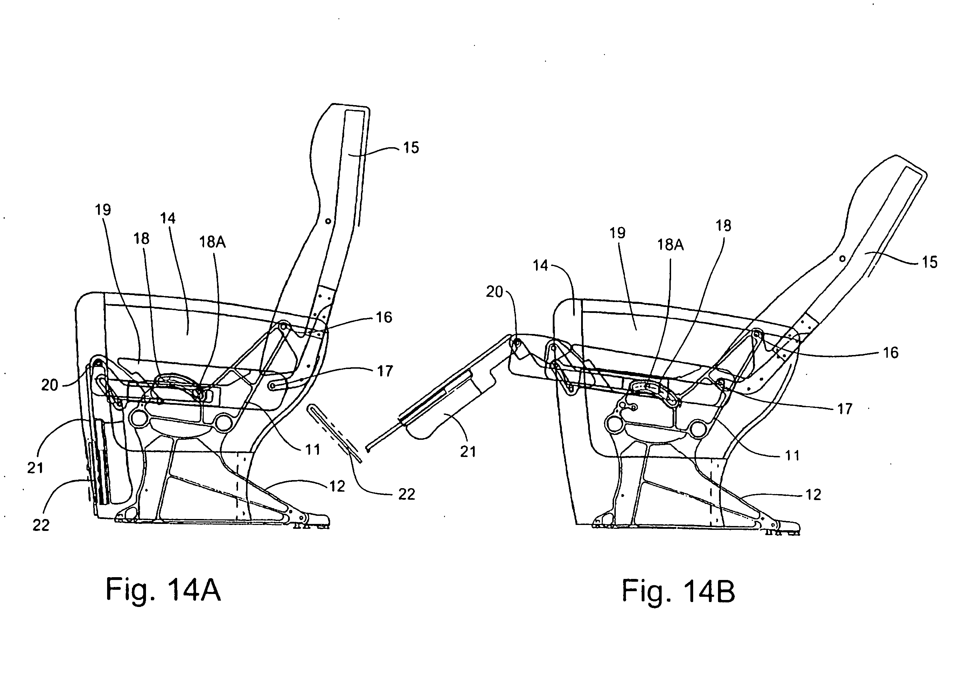

Figures 14A-14C are simplified vertical cross-sections of the seat shown in Figure 1 in the landing/takeoff, recline and sleeper positions.

### Description of the Preferred Embodiment and Best Mode

Referring now specifically to the drawings, a passenger seat according to the present invention is illustrated in Figure 1 and shown generally at reference numeral 10.

The passenger seat 10 includes a seat frame 11 which is attached to a track 13 mounted on the deck of an airplane. Attachment is made by use of track fittings, such as those disclosed in applicant's U.S. Patent Nos. 5,169,091, 5,178,346 or 5,861,318. The seat frame 11 includes horizontally spaced spreaders 12 which include seat pan articulation slots 18. The seat back 15 is attached to the seat frame 11 at back pivot location 16 and to the seat pan 19 at seat pan pivot 17. The seat pan 19 is attached to the seat frame spreaders 12 at the seat pan articulation slot 18. The legrest 21 is attached to the seat pan 19 at legrest pivot 20. A footrest 22 extends out of legrest 21. The seat endbay and consoles 14 bound the occupant on each side.

As shown in Figure 2, the seat 10 is capable of articulating into several positions. The seat back articulation occurs by rotation about back pivot location 16: Seat back articulation drives the seat pan 19 by seat pan pivot 17 and seat pan articulation slot 18, As the seat pan articulates, the position and angle of the seat pan is controlled by the location of the seat pan pivot 17 and the seat pan 19 within the seat pan articulation slot 18. The seat pan 19 also includes seat pan extension 24 which raises and lowers an extra support cushion 28 via slots included in the frame of seat pan 19. Legrest articulation 26 is possible by pivoting about legrest pivot 20. Legrest extension 25 is also possible by extending footrest 22 via a slide mechanism. The legrest 21 and footrest 22 support surfaces consist of a fabric diaphragm suspended between frame supports on each side. The footrest 22 slides into and out of the end of legrest 21.

Referring to Figures 4 and 5, the seat pan 19 includes a seat pan diaphragm 31 attached between two seat pan rails 32 and an additional extra support cushion 28 which can be articulated fore/aft by movement of the seat pan extension rail 33. Upon fore/aft movement of the seat pan extension rail;-extra support cushion 28 articulates upward in extra support cushion articulation slot 30. Overall positioning of the seat pan 19 is driven by the location of seat pan pivots 17 which are connected to seat back 15, and by the location of cam followers 29, which move inside seat pan articulation slot 18.

Referring to Figure 6, legrest 21 consists of a legrest diaphragm 34 suspended between legrest support rails 38 and an additional legrest extension diaphragm 35 suspended between footrest rails 39. Footrest 36 is attached at the end of legrest extension rails 39. Legrest 21 (Figure 1) is connected to seat pan extension rail 33 (Figure 4) and rotates about legrest pivot location 39. Legrest extension rails 39 slide in and out between legrest support rails 38, which provide additional leg clearance for taller passengers. Footrest 36 is attached to legrest extension rails 39 at the footrest pivots 37 and rotates as shown in Figure 5 to provide support for the passengers feet.

As is shown in Figures 7, 8 and 9, the support cushion 28 extends outwardly from the front end of the seat pan 19 as the seat 10 is progressively reclined.

As is shown in Figures 10 and 11, a pin 18A captured in seat pan articulation slot 18 controls movement of the seat pan 19 as the seat 10 is articulated.

Referring now to Figure 12, the legrest diaphragm 34 and the legrest extension diaphragm 35 telescope to lengthen or shorten the overall length of the legrest 21 as desired by the passenger. The legrest extension diaphragm 35 is nested within the legrest diaphragm 34.

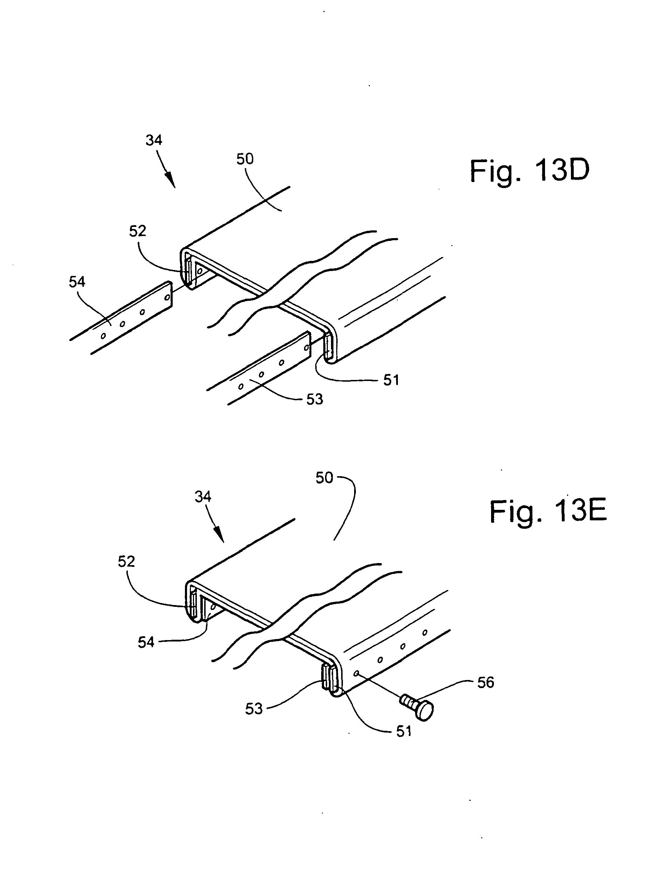

Referring now to Figures 13A-E, the legrest diaphragm 34 is assembled by forming a fabric tube 50(Figure 13A) and positioning two inner rails 51, 52 therein whereby the tube is maintained in an open condition and gives a specified depth to the tube 50 (Figure 13B). A second pair of outer rails 53, 54 (Figure 13C) is then positioned on the outside of the tube 50 adjacent the inner rails 51, 52 (Figure 13D) and pressed upwardly and into alignment with the inner rails 51, 52, as shown in Figure 13E. This movement stretches the fabric and provides a taut, resilient double-layer support for the upper legs of the passenger. Suitable fasteners 56 secure the fabric tube in position between the pairs of rails 51, 52, 53, 54, respectively.

The fabric may be a material made by DuPont and sold under the trademark Dymetrol 200, a dense, nylon-based fabric, a unidirectional fabric sold under the trademark Crystal Flex, or any other suitable fabric. Characteristics important in fabric selection include strength, resiliency, wear resistance and resistance to soiling.

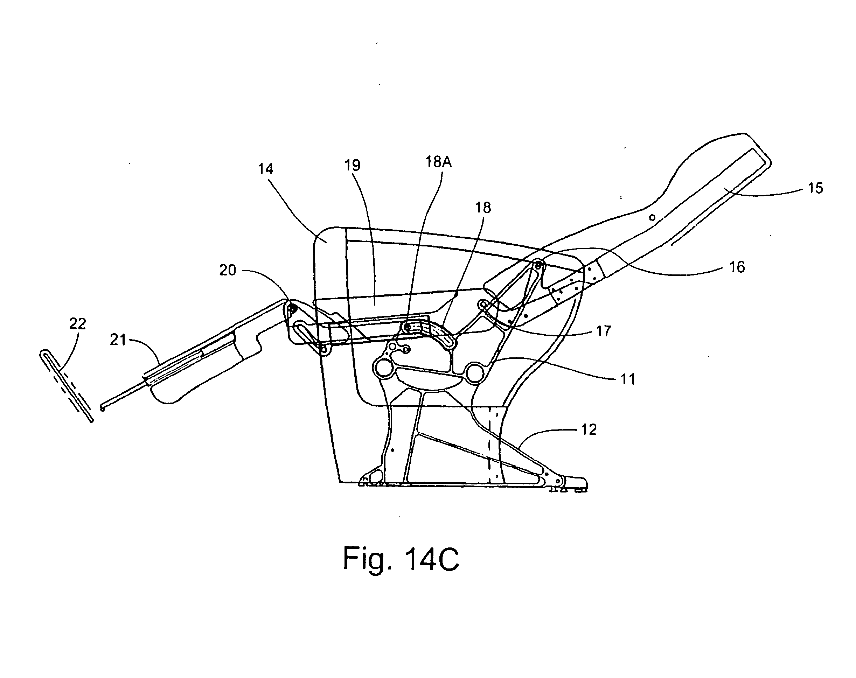

Figures 14A-14C illustrate in simplified form the articulation of the seat 10, including the rearward movement of the seat back 15, the forward movement of the seat pan 19 and the extension of the legrest 21. As shown, the seat back 15 is moved by pivotal movement about the back pivot 16. The back of the seat pan 19 is pivoted about the pivot 17. The forward end of the seat pan is translated between the positions shown in Figures 14A-14C by movement of pivot pin 18A in slot 18. The curve in the slot 18 provides a slight upward movement to the forward end of the seat pan 19 in the recline position (See Figures 2 and 14B) which prevents the passenger from slipping down the seat. In the sleeper position, the seat pan 19 is lowered slightly to more closely align the body of the passenger In a true prone sleeping position. (See Figures 3 and 14C).

The seat may be powered by any suitable drive device, such as pneumatic cylinders, a motor-driven worm drive or other types of electric motors.

## Claims

1. A reclinable passenger seat having a seat frame (11) mounting a seat bottom (19), a seat back (15), extending upwardly from the seat bottom, and a legrest (21)
mounted adjacent a forward end of the seat bottom for being selectively extended generally downwardly and outwardly from the seat bottom for supporting the legs of a passenger, the seat bottom (19) and the legrest (21) being movable relative to the seat back, **characterized in that** which by movement of the seat bottom and the legrest relative to the seat back a seat bottom extension assembly (24,28) is provided increses or decreases the effective length of the seat bottom between the _seat back and legrest to fit the distance between the buttocks and the back of the knees of the passager

2. A reclinable passenger seat according to claim 1, wherein said seat bottom extension assembly (24,28) comprises a frame for carrying the seat bottom (19) relative to the seat back (15) and for selectively moving the seat bottom (19) relative to the seat back (15) to increase or decrease the length of support provided to the legs of the passenger.

3. A reclinable passenger seat according to claim 2, wherein said seat bottom extension assembly (24,28) includes an actuator assembly for moving the seat bottom (19) relative to said seat back (15)

## Patentansprüche

1. Rückenlehnenverstellbarer Flug-/Fahrgastsitz mit einem Sitzrahmen (11), an dem ein Sitzboden (19), eine Rückenlehne (15), die sich vom Sitzboden nach oben erstreckt, und eine Beinauflage (21) montiert sind, die in der Nähe eines vorderen Endes des Sitzbodens montiert ist, so dass sie gezielt allgemein vom Sitzboden nach unten und nach außen ausgefahren werden kann, um die Beine eines Flug-/Fahrgasts zu stützen, wobei der Sitzboden (19) und die Beinauflage (21) in Bezug auf die Rückenlehne beweglich sind, **dadurch gekennzeichnet, dass** eine Sitzbodenausfahranordnung (24, 28) vorgesehen ist, die durch Bewegung des Sitzbodens und der Beinauflage in Bezug auf die Rückenlehne die effektive Länge des Sitzbodens zwischen der Rückenlehne und der Beinauflage entsprechend dem Abstand zwischen dem Gesäß und den Kniekehlen des Flug-/Fahrgasts vergrößert oder verkleinert.

2. Rückenlehnenverstellbarer Flug-/Fahrgastsitz nach Anspruch 1, wobei die Sitzbodenausfahranordnung (24, 28) einen Rahmen umfasst, um den Sitzboden (19) in Bezug auf die Rückenlehne (15) zu tragen und um den Sitzboden (19) in Bezug auf die Rückenlehne (15) gezielt zu bewegen, um die Länge der für die Beine des Flug-/Fahrgasts bereitgestellte Stütze zu vergrößern oder zu verkleinern.

3. Rückenlehnenverstellbarer Flug-/Fahrgastsitz nach Anspruch 2, wobei die Sitzbodenausfahranordnung (24, 28) eine Stellgliedanordnung aufweist, um den Sitzboden (19) in Bezug auf die Rückenlehne (15) zu bewegen.

## Revendications

1. Siège passager inclinable ayant une structure de siège (11) supportant une assise de siège (19), un dossier de siège (15) s'étendant vers le haut depuis l'assise de siège, et un repose-jambes (21) monté en position adjacente à une extrémité avant de l'assise de siège de manière à être déployé de manière sélective généralement vers le bas et l'extérieur depuis l'assise de siège afin de supporter les jambes d'un passager, l'assise de siège (19) et le repose-jambes (21) pouvant être déplacés pa r rapport au dossier de siège, **caractérisé en ce qu'**un ensemble de prolongation d'assise de siège (24, 28) est prévu, lequel, par le mouvement de l'assise de siège et du repose-jambes par rapport au dossier de siège, augmente ou diminue la longueur effective de l'assise de siège entre le dossier de siège et le repose-jambes de manière à s'ajuster à la distance entre les fesses et l'arrière des genoux du passager.

2. Siège passager inclinable selon la revendication 1, dans lequel ledit ensemble de prolongation d'assise de siège (24, 28) comprend une structure pour porter l'assise de siège (19) par rapport au dossier de siège (15) et pour déplacer de manière sélective l'assise de siège (19) par rapport au dossier de siège (15) de manière à augmenter ou diminuer la longueur de support des jambes du passager.

3. Siège passager inclinable selon la revendication 2, dans le que 1 ledit ensemble de prolongation d'assise de siège (24, 28) comporte un ensemble d'actionneur pour déplacer l'assise de siège (19) par rapport audit dossier de siège (15).
